Europäisches Patentamt

European Patent Office

Office européen des brevets

(19)

(11) Publication number: **0 306 891**
**A2**

## (12) EUROPEAN PATENT APPLICATION

(21) Application number: **88114505.6**

(22) Date of filing: **06.09.88**

(51) Int. Cl.⁴: **G06F 9/38**

(30) Priority: **11.09.87 US 96080**

(43) Date of publication of application:
**15.03.89 Bulletin 89/11**

(84) Designated Contracting States:
**DE FR GB IT NL**

(71) Applicant: **NATIONAL SEMICONDUCTOR CORPORATION**
**2900 Semiconductor Drive**
**Santa Clara California 95051-8090(US)**

(72) Inventor: **Iacobovici, Sorin**
**4415 Norwalk Dr. No.14**
**San Jose California 95129(US)**

(74) Representative: **Dipl.-Ing. H. Marsch Dipl.-Ing.**
**K. Sparing Dipl.-Phys.Dr. W.H. Röhl**
**Patentanwälte**
**Rethelstrasse 123**
**D-4000 Düsseldorf 1(DE)**

(54) Pipelined slave protocol for high performance CPU-FPU cluster.

(57) The pipelined slave protocol of the present invention eliminates the communication overhead between a CPU and a Floating Point co-processor for most floating point instructions by pipelining their execution beyond the CPU execution unit. Recovery mechanisms for CPU status information are implemented within the CPU to maintain precise floating point exceptions. As a result, the CPU can support very high floating point performance. The protocol also provides for overlapped execution of floating point and integer instructions by retaining the contents of those CPU registers which will be modified by the execution of an integer instruction.

FIG.5

EP 0 306 891 A2

## PIPELINED SLAVE PROTOCOL FOR HIGH PERFORMANCE CPU-FPU CLUSTER.

### Background of the Invention

#### 1. Field of the Invention

The present invention relates to data processing systems and, in particular, to a new slave interface protocol which permits the execution of floating point instructions to be pipelined beyond the execution unit of the system's central processing unit (CPU) without sacrificing the preciseness of floating point exceptions.

#### 2. Discussion of the Prior Art

In spite of recent unprecedented advances, today's VLSI technology still forces the computer architect to decide which features to integrate on the CPU chip and which features to implement in co-processor chips. With few exceptions, the floating point calculation support for the CPU is implemented in a co-processor.

There are two primary advantages to implementing floating point support in a co-processor. First, CPU support for the Floating Point Unit (FPU) requires significantly fewer transistors than integrating the complete floating point function on the CPU chip. The remaining transistors can be used to increase the CPU's integer performance. Second, if high floating point performance is not mandatory, then floating point instructions (FP-instructions) can be emulated in software, thus decreasing the system price by eliminating the need for a Floating Point Unit chip.

The disadvantages of implementing floating point support on a separate Floating Point Unit chip are, typically, lower performance, because of CPU-FPU communication overhead, and higher CPU pin count, which is required to support an efficient CPU-FPU communication protocol.

Floating point instructions are part of the instruction architecture of state-of-the-art microprocessors. As such, FP-instructions must be executed identically in a microprocessor-based system regardless of whether the execution is performed by an on-chip floating point execution unit or by an off-chip Floating Point Unit. Identical execution, in this case, means both identical results and identical response in the event of a floating point instruction exception (FP-exception).

Exceptions are conditions, events and errors that alter the normal sequence of instruction execution.

The typical microprocessor architecture utilizes a number of floating point registers (FP-registers) for both single (32-bit) precision and double (64-bit) precision. These registers supplement the microprocessor's general purpose registers, which are integer registers. In the implementation of the microprocessor's instruction set, the instruction type implies which type of register should be used. For example, FP-instructions with one or more register operands imply the use of FP-registers. Exceptions to this rule are integer-to-floating point and floating point-to-integer conversion instructions, which imply the use of an FP-register for the floating point operand and of a general purpose register for the integer operand.

In some cases, the FP-instruction might fail, generating one of the exceptions defined by the IEEE 754 standard. An example of such a standard exception is an attempt to divide a finite number by 0. The exception type is indicated by status bits in another register defined by the microprocessor architecture, typically designated the Floating Point Status register. Once set by the occurence of an exception, these bits remain unchanged until cleared by software. Other bits of the Floating Point Status register allow the software to mask each type of FP-exception separately. The occurrence of an unmasked FP-exception sets the proper status bits of the Floating Point Status register and traps the CPU, while the occurrence of a masked FP-exception sets only the corresponding status bits of the Floating Point Status register.

Typically, a special type of interruption, i.e., Trap(FPU), is defined by the microprocessor architecture for unmasked FP-exceptions. When an unmasked FP-exception occurs, the CPU saves the Program Counter value of the failed instruction and jumps to a special routine. The Trap(FPU) service routine might fix in software the problem that generated the exception and re-execute the FP-instruction. The FP-exception handling routines are usually part of the floating point libraries.

Unmasked FP-exceptions generate precise interruptions, since the system status saved when the FP-exception is serviced is always consistent with a sequential architecture model. Special precautions should be taken to achieve precise interruptions in a pipelined implementation of an architecture. This is due to the fact that pipelined instructions might modify the system status in an order different from that defined by a sequential architectural model.

As stated above, microprocessors typically implement the floating point architecture in separate Floating Point Unit co-processors. That is, the Floating Point Unit plays the role of a remote floating point execution unit for the CPU. As such, the CPU sends to the Floating Point Unit the instruction to be executed and the eventual memory operands. The FP-registers and the Floating Point Status registers are implemented as part of the Floating Point Unit chip. As a result, when a FP-instruction operand is in a FP-register, no CPU support is needed for reading or writing the operand.

At the end of the FP-instruction execution by the Floating Point Unit, the CPU is usually free to proceed to the next instruction. However, this is not true in some cases, like, for example, where the FP-instruction changes bits in the CPU's Processor Status register, as in the case of a Floating Point Compare instruction, or where a FP-exception occurs during the FP-instruction execution.

The two conditions stated above typically can be signalled by the Floating Point Unit to the CPU by asserting a special line, "Trap".

For all other cases, the Floating Point Unit will signal the successful completion of the FP-instruction by asserting another line, "Done". If the FP-instruction destination is one of the FP-registers, then the CPU can proceed. If the destination is in memory, the CPU must store the result from the Floating Point Unit in memory.

.A straight-forward solution for maintaining precise FP-exceptions consists of stalling the CPU until the outcome of the FP-instruction execution by the Floating Point Unit is known. Even when no extra work needs to be done by the CPU to support the current FP-instruction, as in the case of FP-instructions with destination in one of the FP-registers, the CPU waits for the "Done" signal before proceeding to the next instruction. As a result, if a FP-exception occurs, the proper Program Counter value PC and system status are saved by the operating system before servicing the exception.

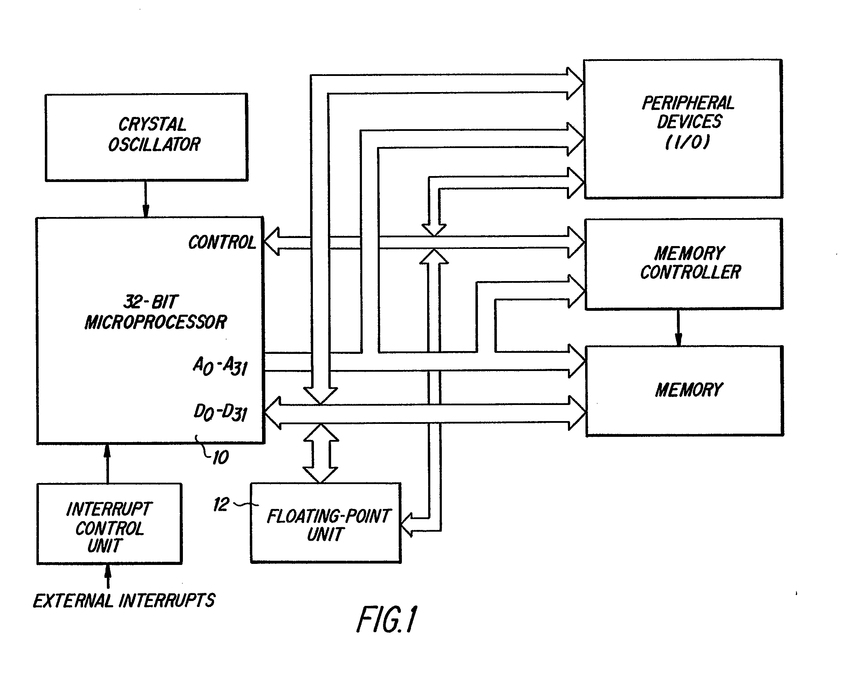

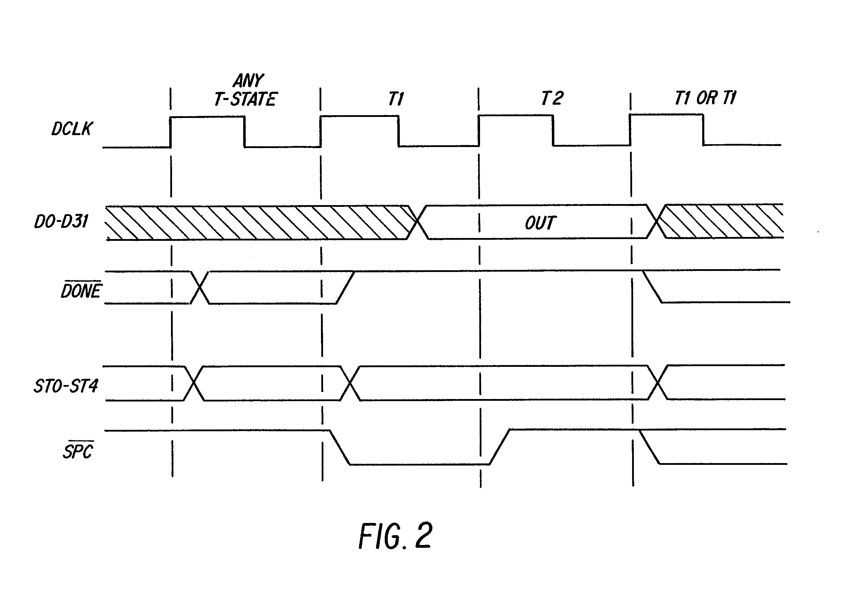

A system block diagram illustrating the CPU-FPU cluster of a typical state-of-the-art 32-bit microprocessor is provided in Fig. 1. The CPU 10 writes instructions and memory operands to the Floating Point Unit 12 and reads results and status from the Floating Point Unit 12 using special, two clock cycle slave bus transactions, as shown in the timing diagram provided in Fig. 2. To save CPU package pins, the CPU-FPU interface uses the data bus and several special control lines ( $\overline{SPC}$ , $\overline{DONE}$ and $\overline{TRAP}$ ).

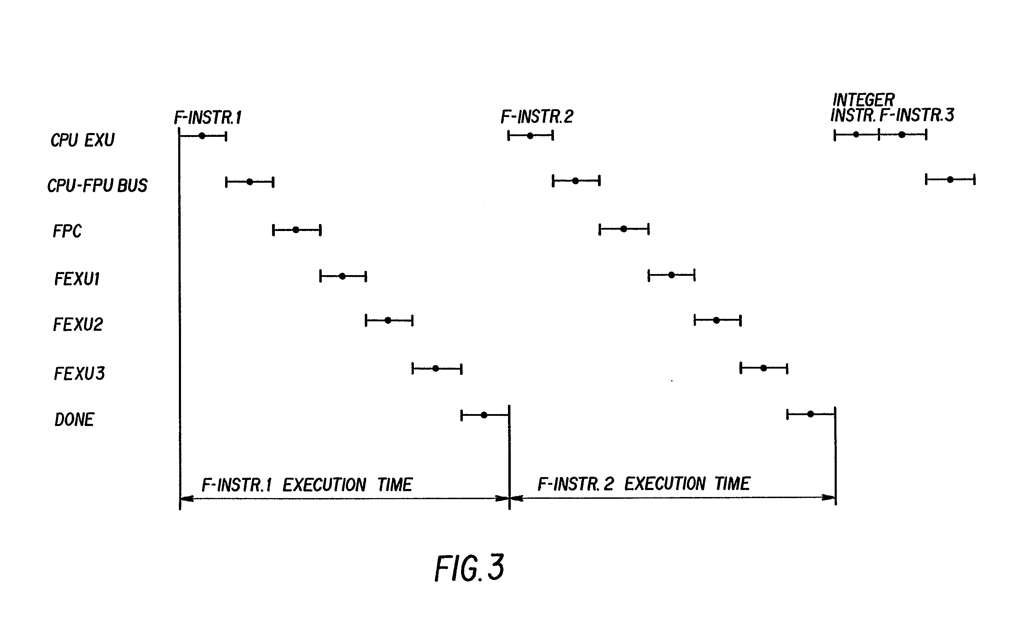

The time spent by a FP-instruction in different resources of CPU 10 and Floating Point Unit 12, including the CPU-FPU bus, is represented in Fig. 3. The example illustrated in Fig. 3 is a register-to-register FP-instruction, i.e., an instruction with both operands and with a destination in FP-registers.

Fig. 3 shows only the execution phases from the moment the decoded FP-instruction reaches the CPU execution unit until the "Done" signal from the Floating Point Unit 12 is processed, allowing the CPU 10 to continue with the next instruction.

The Floating Point Execution Unit illustrated in Fig. 3 is pipelined. The throughput of the FPU execution unit in this example is two clock cycles, while its latency is six clock cycles, i.e., a three-stage pipeline. This is compatible with the performance and internal architecture of state-of-the-art Floating Point Data Path chips. The clock cycles used to specify the performance are CPU equivalent clocks.

As shown in Fig. 3, the FP-instruction execution time is the sum of the time spent by the instruction in all of the represented stages. As such, the instruction throughput is equal, for this implementation, with the instruction latency. Thus, in spite of the high FPU execution unit throughput (2 clock cycles per instruction) for simple instructions like Add-Float, Subtract-Float or Multiply-Float, the CPU-FPU cluster executes these FP-instructions in 14 clock cycles. As stated above, this high overhead is due to the fact that the conventional CPU waits for "Done" before proceeding to the next instruction. While this is a simple way to achieve precise FP-instructions, it is an inefficient use of CPU processing capability.

Summary of the Invention

The present invention provides a new co-processor interface protocol which maintains the advantages of previous protocols and eliminates the disadvantages associated with most floating point instructions.

To eliminate the CPU-FPU protocol overhead, according to the present invention, FP-instruction execution is pipelined. Except for a few special cases, to be described below, the CPU proceeds to the next FP-instruction after issuing one FP-instruction to the Floating Point Unit. The issued FP-instruction is queued inside the Floating Point Unit, waiting its turn to be executed. The signals indicating the outcome of the FP-instruction execution, i.e., either a successful completion or an exception, are received by the CPU in the same order that the FP-instructions were issued to the Floating Point Unit. To maintain precise floating point exceptions, a recovery mechanism inside the CPU saves the Program Counter value and other relevant information related to the instructions issued to the Floating Point Unit. According to one embodiment of the invention, in case of instructions or addressing modes, like Top-Of-Stack, that change the system status not local to the Floating Point Unit, the instruction execution is serialized. That is, the CPU stops and waits for the previously issued FP-instruction to finish before proceeding. The system status not local to the Floating Point Unit consists of all of the memory locations and all of the registers not implemented inside the Floating Point Unit, like the CPU general purpose registers or special registers. According to an alternative embodiment of the invention, FP-instructions and integer instruction execution is overlapped by providing "shadow registers" in the CPU which save the contents of those CPU registers which are modified by execution of integer instructions.

Description of the Drawings

Fig. 1 is a schematic block diagram illustrating the CPU-FPU cluster of a state-of-the-art 32-bit microprocessor.

Fig. 2 is a timing diagram illustrating a CPU write of a FP-instruction or a memory operand to the Floating Point Unit in the cluster illustrated in Fig. 1.

Fig. 3 is a timing diagram illustrating the time spent by a FP-instruction in different resources of the CPU and Floating Point Unit, inclusive of the CPU-FPU bus, utilizing conventional slave protocol.

Fig. 4 is a timing diagram illustrating the time spent by a FP-instruction in different resources of the CPU and Floating Point Unit, inclusive of the CPU-FPU bus, utilizing the protocol of the present invention.

Fig. 5 is a block diagram illustrating the pipelining of FP-instructions in accordance with the present invention.

Figs. 6A-6C combine to provide a flow sheet illustrating an example of the implementation of the protocol of the present invention.

Fig. 7 is a schematic diagram illustrating the configuration of a FP-instruction First-In-First-Out memory in accordance with the present invention.

Fig. 8 is a graph representing the different groups of FP-instructions in the Whetstone benchmark.

Fig. 9 is a schematic diagram illustrating the configuration of an alternative embodiment of a FP-instruction FIFO in accordance with the present invention.

Fig. 10 is a flow sheet illustrating an example of the implementation of CPU support for a CPU-FPU pipelined slave protocol in accordance with the present invention.

Detailed Description of the Invention

As stated above, in accordance with the present invention, the protocol overhead normally associated with the interface between a CPU and Floating Point Unit (FPU) co-processor is eliminated by allowing the CPU's execution unit to proceed to the next instruction while the Floating Point Unit buffers the issued instruction until the Floating Point Unit execution unit becomes available.

By allowing the CPU to proceed, except in special cases, to execution of the next integer or floating point instruction (FP-instruction) after issuing a F-instruction to the Floating Point Unit, the CPU-FPU cluster achieves a high throughput. As explained in greater detail below, recovery mechanisms are provided to maintain precise floating point instruction exceptions (FP-exceptions).

In conventional CPU architecture, if no recovery mechanisms are provided, system status will be changed by the CPU upon execution of new instructions. As a result, FP-exceptions will become imprecise and, thus, incompatible with the CPU architecture. To prevent this, the conventional CPU execution unit proceeds to the next instruction only after all previous instructions passed the point of no exception.

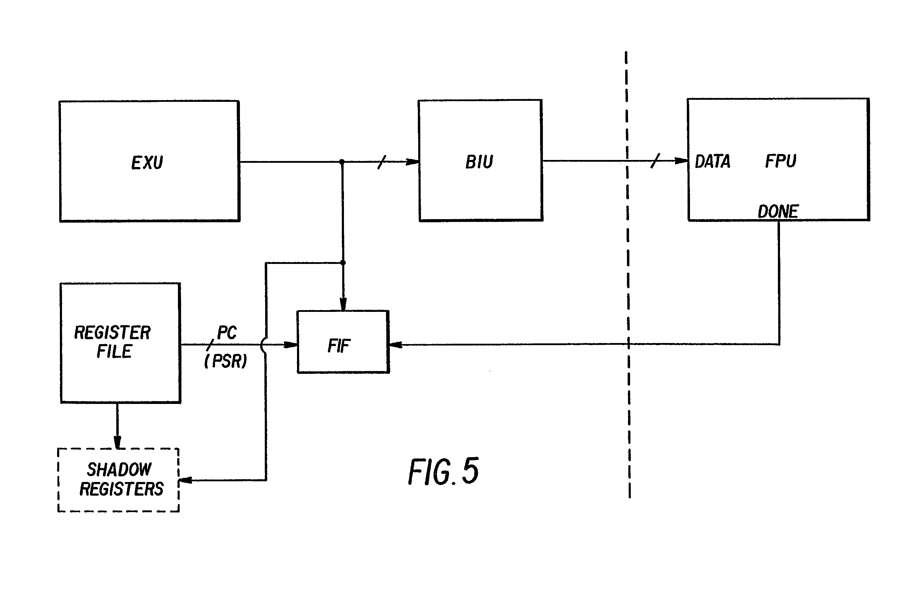

In accordance with the present invention, the FP-exceptions can be kept precise by saving into a special storage mechanism within the CPU, namely a Floating Point Instruction FIFO (FIF), the contents of registers that can change together with other relevant information. The registers are saved in the Floating Point Instruction FIFO when the corresponding FP-instruction is issued to the Floating Point Unit, as illustrated in Fig. 5. In parallel with issuing the current FP-instruction to the Floating Point Unit, the CPU's execution unit loads the instruction's Program Counter value into the Floating Point Instruction FIFO and, except for special cases, proceeds to the next instruction. If the CPU overlaps not only the execution of the FP-instruction sequences, but also the execution of FP-instructions and integer instructions, the Processor Status register is also saved in the Floating Point Instruction FIFO, while the CPU's registers to be modified by the integer instructions are saved in "shadow" registers, as further shown in Fig. 5.

In the pipelined slave protocol of the present invention, the "Done" and "Trap" signals indicate the same conditions as for the non-pipelined protocol described above in conjunction with the discussion of the prior art. That is, "Done" represents successful FP-instruction completion, while "Trap" indicates FP-instruction that changes CPU's PSR or the occurrence of an unmasked FP-exception. The Floating Point Unit asserts these signals in the same order in which the FP-instructions to which they correspond were issued by the CPU to the Floating Point Unit. A "Done" signal received by the CPU simply advances the Floating Point Instruction FIFO. As a result, the register values at the output of the Floating Point Instruction FIFO correspond to the FP-instruction currently being executed by the Floating Point Unit. If the executing FP-instruction signals an exception to the CPU by asserting the "Trap" signal, then the CPU will replace the modified registers with the saved values from the output of the Floating Point Instruction FIFO and then flush the FIF. In this way, when Trap(FPU) begins executing, the system status is consistent with the sequentially architectural model which calls for precise FP-exceptions.

Two pipelined slave approaches are envisioned. One approach allows parallel execution, i.e., overlapping, of FP-instructions and integer instructions. The other approach allows the parallel execution of FP-instructions only.

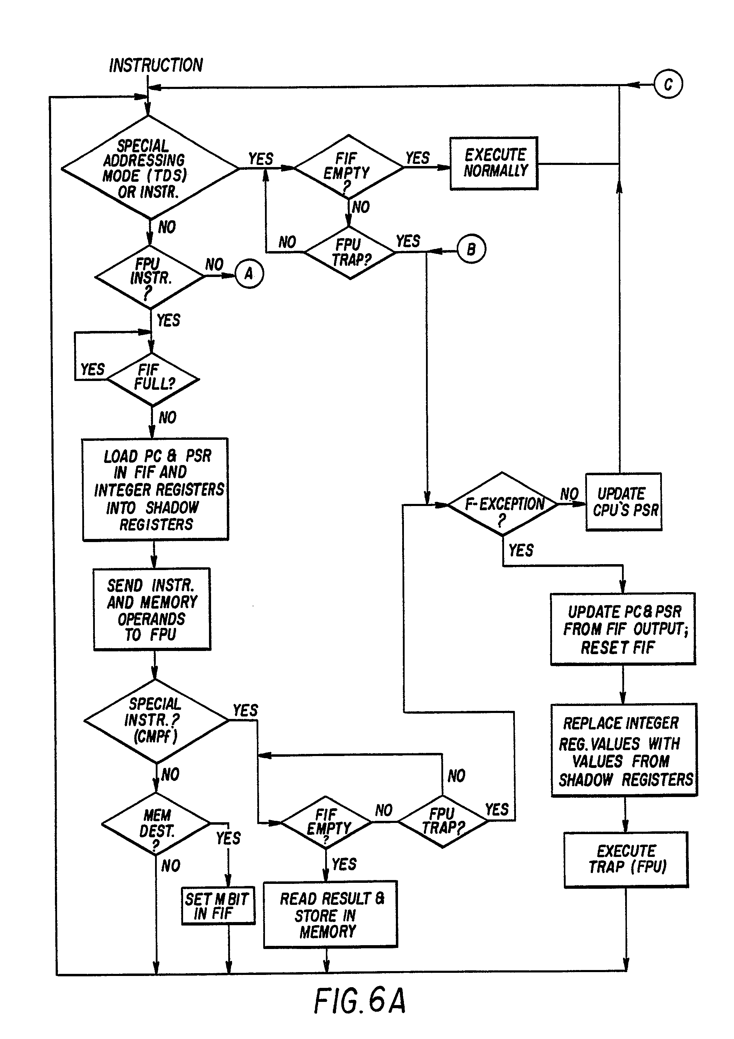

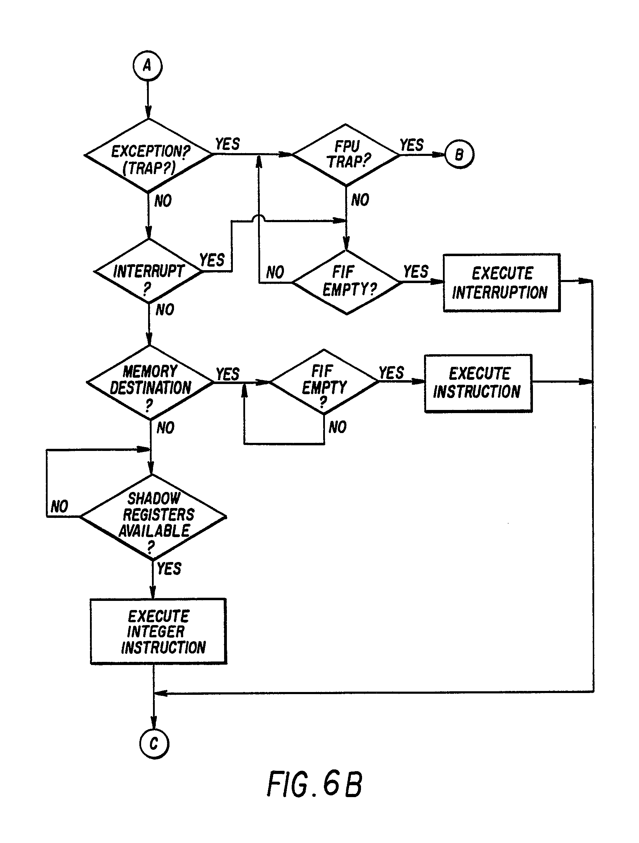

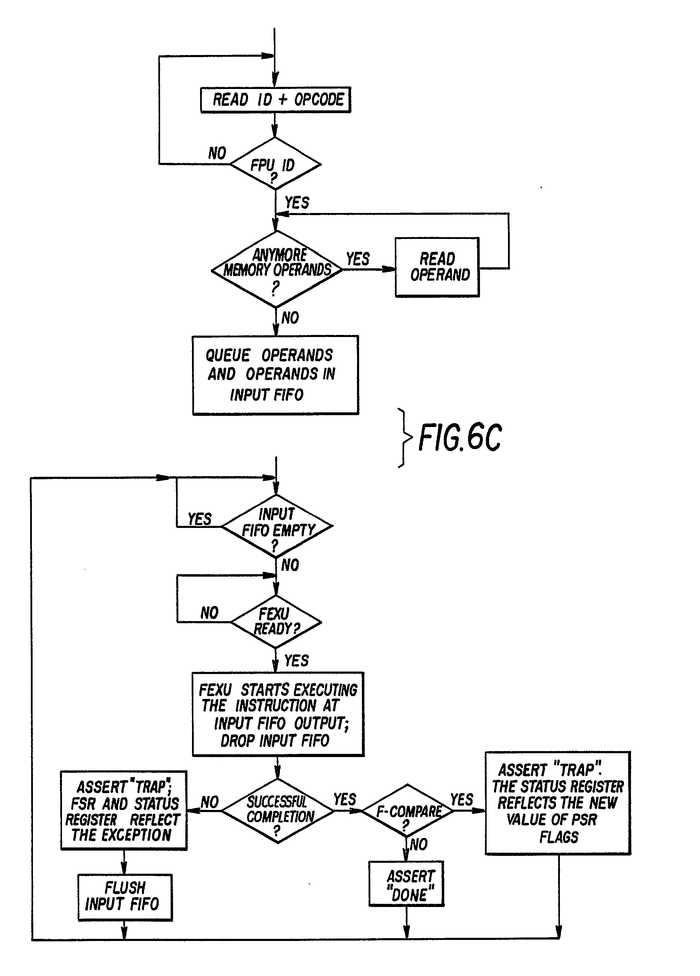

Overlapping FP-instruction and integer instruction execution provides potentially higher performance, but requires relatively complex recovery mechanisms to be implemented inside the CPU in order to maintain the precise nature of the FP-exceptions. The CPU and Floating Point Unit operation for this approach are detailed in the flow sheet provided in Fig. 6.

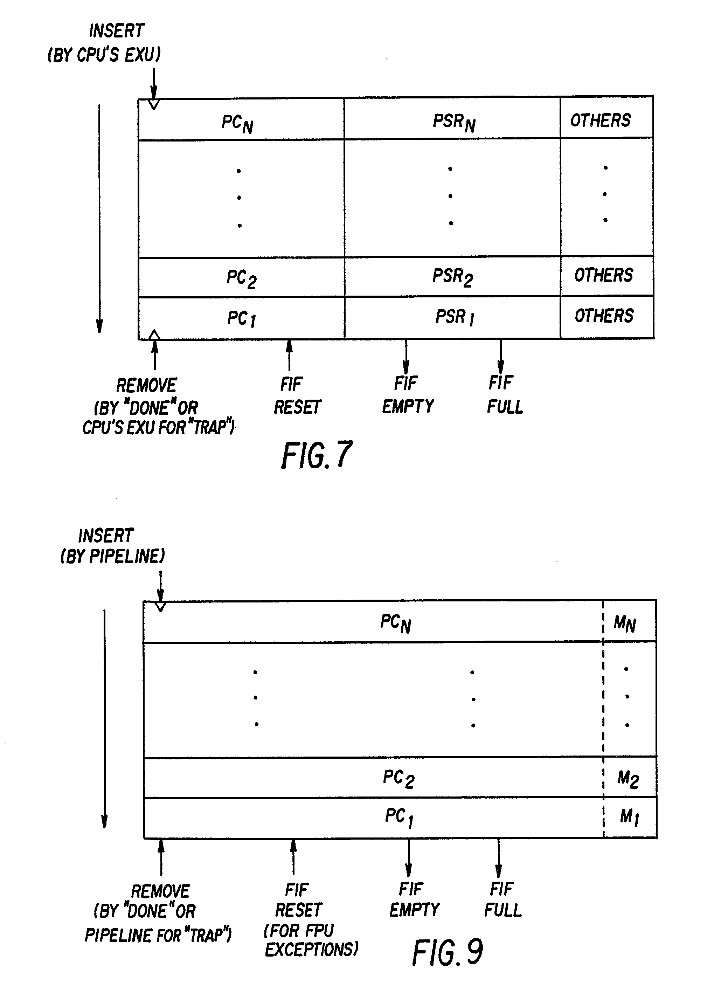

The configuration of the Floating Point Instruction FIFO for this approach is shown in Fig. 7.

When allowing FP-instructions and integer instructions to be executed in parallel, not only the Program Counter PC is saved in the Floating Point Instruction FIFO, but also the CPU's Processor Status Register PSR. This is required because some of the integer instructions modify Program Status Register bits and the Program Status Register must be restored to its original value in the event of an FP-exception.

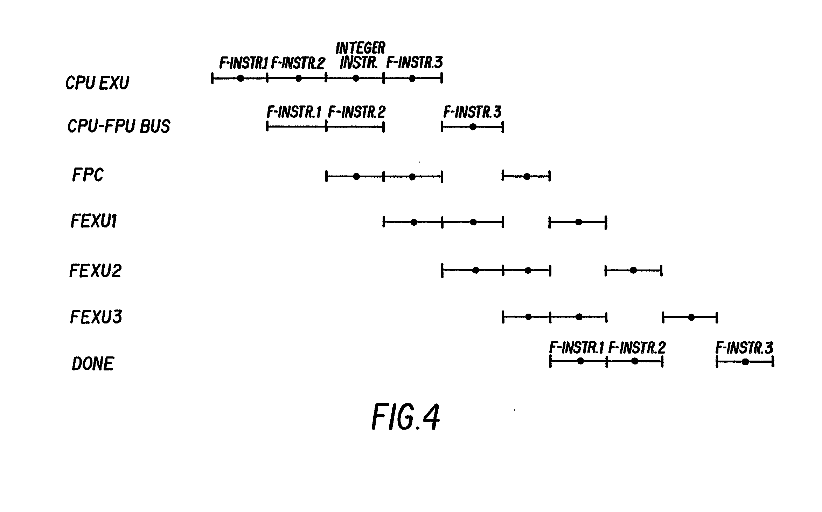

With the exception of the special cases discussed below, the CPU can proceed to the next instruction after issuing the FP-instruction to the Floating Point Unit. The pipelining of the FP-instruction execution of the CPU's execution unit, the CPU-FPU bus, the FPU controller, FPU execution unit, etc., is represented in Fig. 4. As long as no special case occurs, the CPU-FPU cluster delivers a peak throughput equal to the throughput of the slowest stage of the pipeline (2 CPU clock cycles for register-to-register FP-instruction execution for the example shown in Fig. 4). This is a much higher throughput than in the case of the non-pipelined slave interface.

If the FP-instruction destination is in memory, the CPU can send the instruction and operands to the Floating Point Unit and then stop, waiting for the Floating Point Instruction FIFO to become empty. An FIF empty condition indicates, in this case, that all FP-instructions sent to the Floating Point Unit were successfully completed and the result of the last instruction is available for the CPU to read and store into its memory destination.

This approach prevents out of order memory modification while maximizing performance, since the opcode and eventual memory operands are sent to the Floating Point Unit overlapped with Floating Point Unit execution of previous FP-instructions. If the next integer instruction has a memory destination, the CPU must detect this and stop, waiting for the FIF empty condition. This is done in order to prevent memory modification, i.e., system status change, before it has been determined that no FP-exceptions can occur.

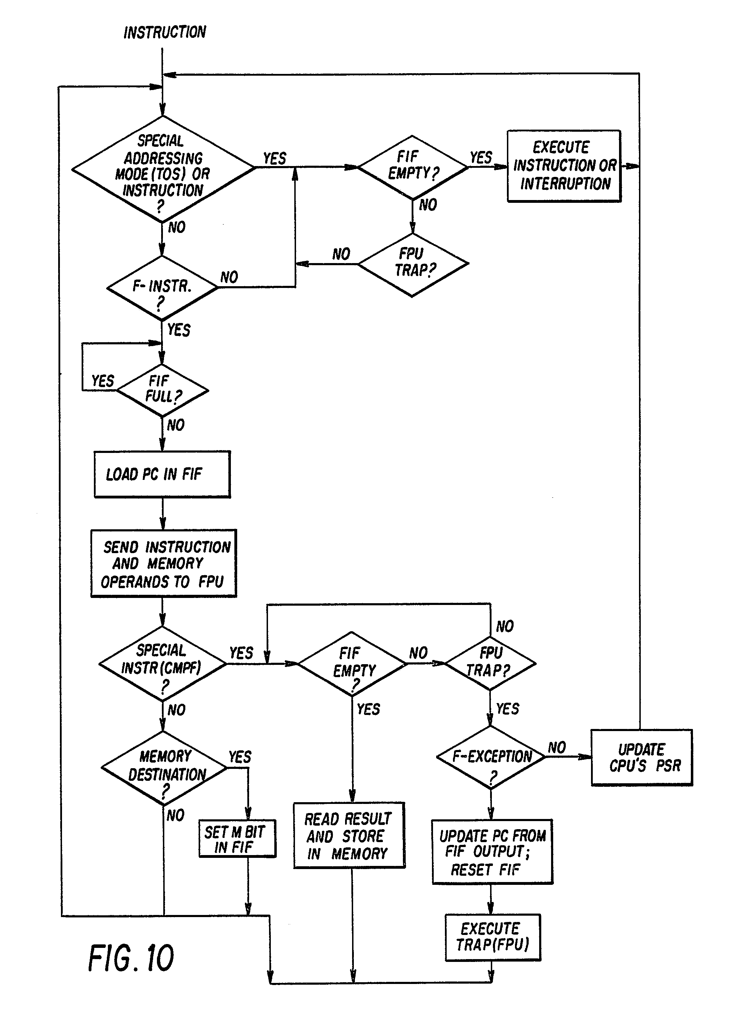

As illustrated in Fig. 9, another approach is to save in the FIF an extra bit, i.e. the M bit, when the FP-instruction is issued to the CPU and allow the CPU to proceed to the next instruction. When an FP-instruction with destination in memory is executed by the Floating Point Unit, the CPU will know that this is the case by looking at the M bit at the bottom of the FIF. If the M bit is set and "Done" is received from the Floating Point Unit, the CPU can write the result directly to memory from the Floating Point Unit by asserting the address and the proper control signals while the Floating Point Unit drives the result value on the data bus.

If a FP-instruction with destination in a FP-register is followed by integer instructions with the destination in CPU registers, the CPU can begin executing these instructions immediately after issuing the FP-instruction to the Floating Point Unit. To do this, and to maintain precise FP-exceptions, the CPU must implement "shadow registers". These shadow registers are used to save the old value of the CPU registers before they are modified. In the case of a FP-exception, the CPU restores its register values using the values in the shadow registers. As a result, the system status is maintained consistent with the sequential architectural model.

A FP-instruction, like Floating Point Compare, which modifies the CPU's Processor Status register, will signal completion to the CPU asserting the "Trap" line. As "Trap" requests CPU intervention, the CPU sends the instruction and operands to the Floating Point Unit and then stops, waiting for "Trap".

Addressing modes like Top-Of-Stack, which implicitly change CPU registers, must also be detected and treated carefully by the CPU. One possible approach is to save the SP register in the Floating Point Instruction FIFO and restore it in case of a FP-exception. This complication is not justified, though, by the performance return of allowing the FP-instructions with Top-Of-Stack operands to be pipelined. A simpler approach is to have the CPU detect the FP-instructions with Top-Of-Stack operands and issue them to the Floating Point Unit only after the Floating Point Instruction FIFO becomes empty, i.e., after successful completion of all previous FP-instructions.

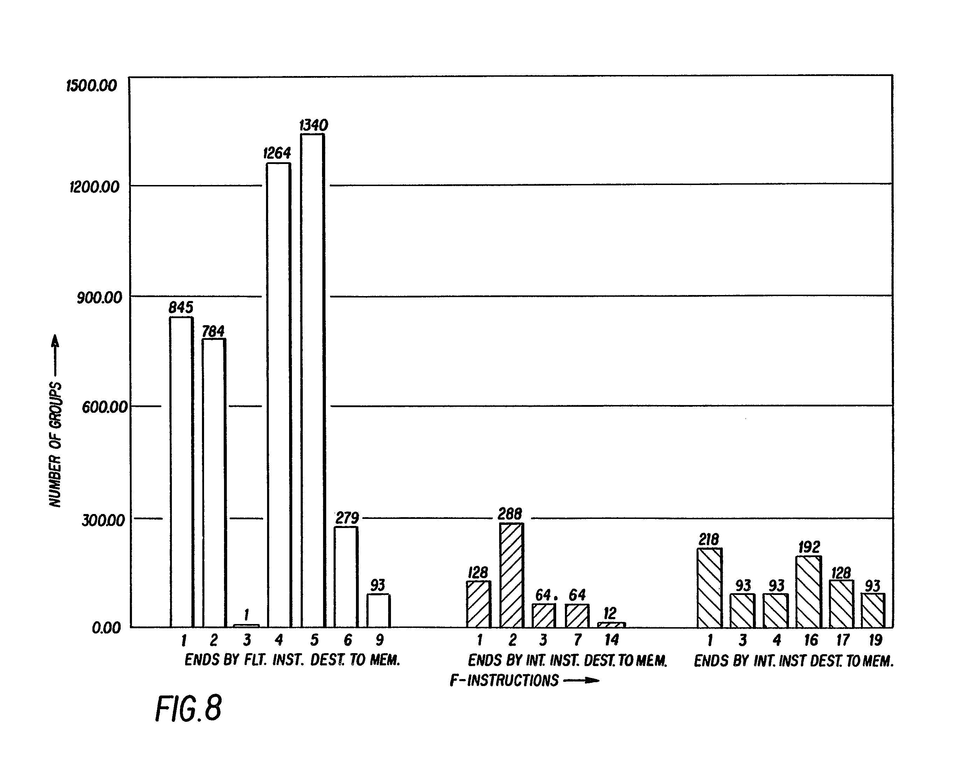

In order to more fully understand the contribution of each of the mechanisms described above to CPU performance, the Whetstone benchmark compiled with a CTP Fortran Compiler was analyzed. The purpose of the analysis was to detect groups of FP-instructions that can be pipelined. These were classified in groups that end with a FP-instruction with destination memory, groups that end with an integer instruction with destination CPU register, groups that end with an integer instruction with destination memory, etc. The results of the analysis are provided in the Fig. 8 graph.

As is obvious from the distribution shown in Fig. 8, the most significant contribution to the floating point performance improvement is due to pipelining, i.e., overlapping of FP-instruction sequence execution. Fortunately, the CPU support for FP-instruction pipelining is relatively simple. The support mechanisms become complex when trying to overlap FP-instruction and integer instruction execution as described above, i.e. implementing CPU shadow registers, saving PSR and FIF, etc. But, as shown in Fig. 8, the number of cases that take advantage of such an overlap is minimal, including only those FP-instruction groups that end with an integer instruction with destination in a CPU register.

For programs that use FP-instructions heavily, like scientific programs, the number of cases that take advantage of the FP-instruction and integer instruction overlap is even more rare than as shown in Fig. 8.

Due to the low performance gain and the high implementation complexity of the CPU feature that allows overlap of FP-instruction and integer instruction execution, the preferred embodiment of the present invention implements the mechanisms that support FP-instruction pipelining only. The difference between the more complete solution described above and the preferred solution consists in the fact that the CPU stops after issuing a FP-instruction to the Floating Point Unit if the next instruction is an integer instruction. The CPU will begin executing the integer instruction only when the Floating Point Instruction FIFO becomes empty, i.e., when all issued FP-instructions are successfully completed.

A decision to serialize the FP-instruction execution when an integer instruction is encountered eliminates the need for CPU shadow registers. Since the CPU stops on an FP-instruction that updates the Processor Status register, the Floating Point Instruction FIFO needs to save only the Program Counter of the FP-instruction issued to the Floating Point Unit and eventually the M bit, as described above and as shown in Fig. 9. As stated above, the Program Counter value is input to the FIF when the corresponding FP-instruction is issued to the Floating Point Unit.

An example of the CPU and Floating Point Unit support for the FP-instruction pipelining only is detailed in the flow sheet provided in Fig. IO. The Floating Point Unit FIFO that saves the incoming FP-instruction is deeper than the CPU's Floating Point Instruction FIFO. At the same time the signals indicating the outcome of the FP-instruction execution ("Done" or "Trap") are asserted by the Floating Point Unit in the same order in which the CPU issued the corresponding FP-instructions. As a result of these two conditions, there is no need for a special line to signal the CPU if the Floating Point Unit cannot accept more instructions. This is because the CPU will stop due to the Floating Point Instruction FIFO being full before the Floating Point Unit's FIFO has a chance to become full.

The performance achieved by the CPU-FPU cluster described above depends on the executed workload, the compiler quality and on the speed of the Floating Point Unit.

The memory-to-register FP-instructions have a lower throughput because the CPU's execution unit and the CPU-FPU bus need two extra clock cycles for each 32-bit operand word in order to fetch and transfer it to the Floating Point Unit. Using a memory-to-register instruction provides better performance than first loading the memory operand into a FP-register and then executing a register-to-register instruction. Nevertheless, the second approach may be better if the memory operand is used by more than one FP-instruction.

The execution time is the full instruction latency, i.e., 14 clocks for the CPU-FPU cluster, for the serializing FP-instructions, as well as for the last FP-instruction before an integer instruction.

The Floating Point Instruction FIFO depth should be a compromise between performance and implementation complexity.

In summary, fast floating point execution units require too many transistors to be integrated with state-of-the-art microprocessors. For fast Floating Point Unit co-processor chips, the efficiency of the CPU-FPU communication's protocol becomes the critical factor for floating point performance. A protocol that forces the CPU to wait for the outcome of the FP-instruction execution by the Floating Point Unit significantly deteriorates performance. The pipelined slave protocol of the present invention eliminates the CPU-FPU communication overhead for most FP-instructions by pipelining their execution beyond the CPU execution unit. At the same time, recovery mechanisms implemented within the CPU to maintain precise FP-exceptions. As a result, the CPU can support very high floating point performance without sacrificing precise exceptions.

It should be understood that various alternative to the embodiment of the invention described herein may be employed in practicing the invention. It is intended that the following claims define the scope of the invention and that structures and methods within the scope of these claims and their equivalents be covered thereby.

## Claims

1. In a data processing system which includes a central processing unit (CPU) and a Floating Point Unit for executing floating point instructions issued by the CPU, the improvement comprising storage means within the CPU for storing CPU status information related to the floating point instructions issued by the CPU for pipelined execution by the Floating Point Unit such that the CPU status information can be recovered if a floating point instruction executed in the Floating Point Unit results in an exception.

2. The data processing system as in Claim 1 wherein the status information comprises the Program Counter value of the floating point instructions issued by the CPU.

3. The data processing system as in Claim 2 wherein the status information includes information indicative of whether or not the destination of the floating point instruction issued to the Floating Point Unit is in memory.

4. The data processing system as in Claim 2 wherein the status information further comprises the contents of the CPU's Processor Status register related to the floating point instructions issued by the CPU.

5. The data processing system as in claim 4 wherein the execution of floating point instructions and integer instructions is overlapped and further comprising shadow storage means within the CPU for retaining additional information related to the status of the CPU at a time corresponding to issuance of a floating point instruction to the Floating Point Unit, the additional status information comprising the contents of those CPU registers which are modified by the execution of integer instructions, such that the contents of those CPU registers can be recovered if execution of a floating point instruction results in an exception.

6. In a data processing system which includes a central processing unit (CPU) and a Floating Point Unit for executing floating point instructions, a method for pipelined execution of floating point instructions while maintaining precise exceptions, the method comprising:

issuing a floating point instruction;
storing the floating point instruction within the Floating Point Unit;
storing subsequently issued floating point instructions within the Floating Point Unit such that floating point instructions are sequentially executed in their order of issuance by the CPU;
storing in the CPU information related to the status of the CPU at a time corresponding to issuance of each floating point instruction; and
recovering the status information for a corresponding floating point instruction if the execution of that floating point instruction results in an exception.

7. A method as in Claim 6 wherein the information stored in the CPU includes information indicative of whether or not the destination of the floating point instruction is in memory.

8. A method as in Claim 7 wherein, in the event that the destination of the floating point instruction is in memory, the CPU writes the results of the floating point instruction to memory by asserting the address and the proper control signals while the Floating Point Unit drives the result value on the system data bus.

9. In a data processing system which includes a central processing unit (CPU) and a Floating Point Unit for executing floating point instructions issued by the CPU, a method for overlapped execution of floating point instructions and integer instructions while maintaining precise exceptions, the method comprising:

issuing a floating point instruction;
queueing the floating point instruction in the Floating Point Unit with previously-issued floating point instructions for sequential execution in the order issued by the CPU;
storing in the CPU information related to the status of the CPU at a time corresponding to the issuance of the floating point instruction;
issuing an integer instruction for execution;
storing in the CPU additional information related to the status of the CPU at a time corresponding to the issuance of the integer instruction;
executing the floating point instruction; and
recovering the status information and the additional status information if execution of the floating point instruction results in an exception.

FIG.1

FIG. 2

EP 0 306 891 A2

FIG. 3

EP 0 306 891 A2

CPU EXU

CPU-FPU BUS

FPC

FEXU1

FEXU2

FEXU3

DONE

F-INSTR1 F-INSTR.2

INTEGER
INSTR. F-INSTR.3

F-INSTR.1 F-INSTR.2

F-INSTR. 3

F-INSTR.1 F-INSTR.2

F-INSTR.3

*FIG.4*

FIG.5

EP 0 306 891 A2

FIG.6A

FIG. 6 B

READ ID + OPCODE

FPU ID ? — NO

YES

ANYMORE MEMORY OPERANDS ? — YES → READ OPERAND

NO

QUEUE OPERANDS AND OPERANDS IN INPUT FIFO

} FIG.6C

INPUT FIFO EMPTY ? — YES

NO

FEXU READY? — NO

YES

FEXU STARTS EXECUTING THE INSTRUCTION AT INPUT FIFO OUTPUT; DROP INPUT FIFO

ASSERT "TRAP"; FSR AND STATUS REGISTER REFLECT THE EXCEPTION ← NO — SUCCESSFUL COMPLETION ? — YES → F-COMPARE ? — YES → ASSERT "TRAP". THE STATUS REGISTER REFLECTS THE NEW VALUE OF PSR FLAGS

NO

FLUSH INPUT FIFO

ASSERT "DONE"

INSERT
(BY CPU'S EXU)

| $PC_N$ | $PSR_N$ | OTHERS |
|---|---|---|
| ⋮ | ⋮ | ⋮ |
| $PC_2$ | $PSR_2$ | OTHERS |
| $PC_1$ | $PSR_1$ | OTHERS |

REMOVE
(BY "DONE" OR
CPU'S EXU FOR "TRAP")

FIF
RESET

FIF
EMPTY

FIF
FULL

*FIG. 7*

INSERT
(BY PIPELINE)

| $PC_N$ | $M_N$ |
|---|---|
| ⋮ | ⋮ |
| $PC_2$ | $M_2$ |
| $PC_1$ | $M_1$ |

REMOVE
(BY "DONE" OR
PIPELINE FOR "TRAP")

FIF
RESET
(FOR FPU
EXCEPTIONS)

FIF
EMPTY

FIF
FULL

*FIG. 9*

FIG.8

EP 0 306 891 A2

INSTRUCTION

FIG. 10